# EUROPEAN PATENT APPLICATION

(11) **EP 4 557 456 A1**
(43) Date of publication of application: **21.05.2025**
(21) Application number: 23838881.3
(22) Date of filing: 10.07.2023
(51) Int. Cl.: H01M 10/613, H01M 10/617

(54) **HEAT DISSIPATION AIR DEFLECTOR, BATTERY SUPPORT, BATTERY ASSEMBLY, BATTERY PACK, ENERGY STORAGE BATTERY CABINET, AND ENERGY STORAGE SYSTEM**

(30) Priority: 15.07.2022 CN 202210837783
(71) Applicant: BYD Company Limited, Shenzhen, Guangdong 518118 (CN)
(72) Inventor: WANG, Biao, Shenzhen, Guangdong 518118 (CN); YIN, Xueqin, Shenzhen, Guangdong 518118 (CN); CAO, Hu, Shenzhen, Guangdong 518118 (CN); YIN, Xiaoqiang, Shenzhen, Guangdong 518118 (CN); YANG, Guibo, Shenzhen, Guangdong 518118 (CN)
(74) Representative: Mathys & Squire
(86) International application number: PCT/CN2023/106492
(87) International publication number: WO 2024/012389

(57) **Abstract**

A heat dissipation air deflector, a battery support using a heat dissipation air deflector, a battery assembly, a battery pack, an energy storage battery cabinet, and an energy storage system. The heat dissipation air deflector is suitable for being in contact with a battery and is used for dissipating heat of the battery. An air inlet chamber and air outlet chambers adjacent to two sides of the air inlet chamber are formed inside the heat dissipation air deflector; an air inlet communicated with the air inlet chamber is formed at one side of the heat dissipation air deflector; two air outlets are formed at other opposite sides of the heat dissipation air deflector; the two air outlets are respectively communicated with the two air outlet chambers; and the positions where the air inlet chamber is adjacent to the two air outlet chambers are communicated with each other by means of an air hole. The present invention aims to improve the heat dissipation uniformity of the batteries in the battery assembly, the battery pack, the energy storage battery cabinet and the energy storage system.

## Description

### CROSS-REFERENCE TO RELATED APPLICATIONS

This application claims priority to Chinese Patent Application No. 202210837783.3, filed on July 15, 2022 and entitled "HEAT DISSIPATION AIR DEFLECTOR, BATTERY SUPPORT, BATTERY ASSEMBLY, BATTERY PACK, ENERGY STORAGE BATTERY CABINET, AND ENERGY STORAGE SYSTEM", which is incorporated herein by reference in its entirety.

### FIELD

The present disclosure relates to the field of batteries, and in particular, to a heat dissipation air deflector, a battery support, a battery assembly, a battery pack, an energy storage battery cabinet, and an energy storage system.

### BACKGROUND

With the development of electrochemical energy storage technology, energy storage is increasingly used in the power industry, and there are strict requirements on an energy storage battery cabinet and stability of operation of an energy storage system. The energy storage battery cabinet is usually large in size. In existing air cooling solutions, heat dissipation is usually uneven in batteries at various positions due to cooling gas flowing over a large span, differences in flow resistance at various positions, and temperature changes along a flow path. Therefore, there is room for improvement.

### SUMMARY

In view of this, the present disclosure aims to provide a heat dissipation air deflector, a battery support using the heat dissipation air deflector, a battery assembly, a battery pack, an energy storage battery cabinet, and an energy storage system, aiming to improve heat dissipation uniformity of batteries at various positions in the battery assembly, the battery pack, the energy storage battery cabinet, and the energy storage system.

A technical solution of the present disclosure is as follows.

A heat dissipation air deflector is suitable for being in contact with a battery and is configured for heat dissipation of the battery. An air inlet cavity is formed inside the heat dissipation air deflector, and the heat dissipation air deflector is adjacent to air outlet cavities on two sides of the air inlet cavity. An air inlet that is in communication with the air inlet cavity is provided on one side of the heat dissipation air deflector, two air outlets are provided on the other opposite side of the heat dissipation air deflector, and the two air outlets are respectively in communication with the two air outlet cavities. Positions at which the air inlet cavity is adjacent to the air outlet cavities are in communication via air holes.

In some implementations, the heat dissipation air deflector comprises:
a housing, a cavity being formed inside the housing; and
two separating plates, the two separating plates being spaced apart in the cavity, and separating the cavity into the air inlet cavity located between the two separating plates and the two air outlet cavities located between the separating plates and the housing; and
the multiple air holes being distributed on the separating plates along an air outlet direction.

In some implementations, pore sizes of the multiple air holes gradually increase or show an increasing trend along a direction from the air inlet to the air outlets.

In some implementations, spacings between the multiple air holes decrease or show a decreasing trend along the direction from the air inlet to the air outlets.

In some implementations, a volume of the air inlet cavity accounts for one third to one half of a volume of the cavity inside the housing.

A battery support comprises:
two bottom plates that are spaced apart, configured to support a battery;
two end plates, respectively connected to the bottom plates and configured to constrain two sides of the battery; and
the heat dissipation air deflector, the heat dissipation air deflector being arranged in a gap between the bottom plates and being configured to be in contact with the battery in a heat conducting manner.

In some implementations, a heat dissipation air duct extending in a run-through manner is provided in the at least one bottom plate, and the heat dissipation air duct extends in a direction from the air inlet to the air outlets.

In some implementations, the battery support further comprises two baffles, and the baffles are respectively arranged on the two bottom plates and are configured to block two ends of the battery.

A battery assembly comprises:
the battery support, and
multiple cells.

The battery assembly has a predetermined length direction and a width direction perpendicular to the length direction, the multiple cells are arranged along the width direction of the battery assembly, a thickness direction of the cells is consistent with the width direction of the battery assembly, and a length direction of the cells is consistent with the length direction of the battery assembly and extends from one side of the battery assembly in the length direction to the other opposite side of the battery assembly in the length direction.

At least a part of bottom portions of the multiple cells are supported on bottom plates, and two end plates are sandwiched between two sides of the multiple cells in the thickness direction; and a heat dissipation air deflector is in contact with the cells in a heat conducting manner.

A battery pack comprises multiple battery assemblies; and each of the battery assemblies has a height direction perpendicular to a length direction and a width direction of each of the battery assemblies, and the multiple battery assemblies are stacked along the height direction.

In some implementations, the battery pack comprises K battery assemblies, and 2≤K≤16.

In some implementations, the battery assemblies comprise even-numbered cells; and the cells each comprise a positive terminal and a negative terminal, and the positive terminal and the negative terminal are respectively located at two opposite ends of the cells in a length direction.

An energy storage battery cabinet comprises:
a cabinet body;
the battery pack, mounted and accommodated in the cabinet body;
an air conditioning assembly, mounted on the cabinet body and configured to adjust a temperature inside the cabinet body; and
a battery manager, electrically connected to the battery pack and configured to manage the battery pack.

An energy storage system comprises at least one energy storage battery cabinet.

In a heat dissipation air deflector, a battery support using the heat dissipation air deflector, a battery assembly, a battery pack, an energy storage battery cabinet, and an energy storage system, an air inlet cavity is formed inside the heat dissipation air deflector, and the heat dissipation air deflector is adjacent to air outlet cavities on two sides of the air inlet cavity. An air inlet that is in communication with the air inlet cavity is provided on one side of the heat dissipation air deflector, two air outlets are provided on the other opposite side of the heat dissipation air deflector, and the two air outlets are respectively in communication with the two air outlet cavities. Positions at which the air inlet cavity is adjacent to the air outlet cavities are in communication via air holes. In this way, a cooling airflow entering the middle air inlet cavity can both flow through the air inlet cavity and enter the air outlet cavities on the two sides via the air holes, so that the batteries in contact with positions of various cavities can dissipate heat. In addition, the air inlet is provided on one side of the air inlet cavity, and air does not enter the air inlet cavity from an entire side surface of the heat dissipation air deflector, so that an area of the air inlet can be reduced, to avoid a problem that when an air volume and a wind speed are too low, after cold air blowing by an air conditioner absorbs heat generated by batteries around the air inlet, a cold air volume decreases and a temperature rises, and the further the cold air flows towards the air outlets, the higher the temperature, resulting in heat dissipation of the battery close to the air inlet and batteries close to the air outlets being not uniform and an excessive temperature difference. In summary, uniform heat dissipation of batteries in contact with the positions of various cavities can be implemented.

The additional aspects and advantages of the present disclosure will be set forth in part in the description below, parts of which will become apparent from the description below, or will be understood by the practice of the present disclosure.

### BRIEF DESCRIPTION OF THE DRAWINGS

The foregoing and/or additional aspects and advantages of the present disclosure become obvious and easily understood in descriptions of the embodiments with reference to the following accompanying drawings.
FIG. 1 is a schematic diagram of a structure of an energy storage system according to an embodiment of the present disclosure;
FIG. 2 is a schematic diagram of a structure of an energy storage battery cabinet in FIG. 1, where a cabinet door is in an open state;
FIG. 3 is a schematic diagram of a structure of a battery pack in the energy storage battery cabinet shown in FIG. 2, and shows an air inlet direction;
FIG. 4 is a schematic diagram of an internal frame of the energy storage battery cabinet shown in FIG. 2, and shows a cooling flow path;
FIG. 5 is a schematic diagram of a structure of a battery assembly in the battery pack shown in FIG. 3;
FIG. 6 is a schematic diagram of a structure of a battery support in the battery assembly shown in FIG. 5;
FIG. 7 is a schematic diagram of a structure of a heat dissipation air deflector in the battery support shown in FIG. 6;
FIG. 8 is a top view of the heat dissipation air deflector shown in FIG. 7, and shows an air flow path; and
FIG. 9 is a schematic plan view of air holes on one side of the heat dissipation air deflector shown in FIG. 7.

In the drawings:
Energy storage system 1000, energy storage battery cabinet 100, distribution box 200, mounting frame 300,
cabinet body 11, battery pack 12, air conditioning assembly 13, battery manager 14,
battery assembly 120, cell 121, battery support 122, heat dissipation air duct 1211,
bottom plate 1210, end plate 1220, heat dissipation air deflector 1230, baffle 1240,
air inlet cavity 1231, air outlet cavity 1232, air inlet 1233, air hole 1234, and air outlet 1235.

### DETAILED DESCRIPTION

Detail description of embodiments of the present disclosure will be made in the following, and examples thereof are illustrated in the drawings, throughout which identical or similar elements or elements of identical or similar functions are represented with identical or similar reference numerals. The embodiments that are described with reference to the accompanying drawings are exemplary, and are only used to interpret the present disclosure, instead limiting the present disclosure.

In the description of the present disclosure, it should be understood that, orientations or position relationships indicated by terms such as "center", "longitudinal", "transverse", "length", "width", "thickness", "up", "down", "front", "rear", "left", "right", "vertical", "horizontal", "top", "bottom", "inner", "outer", "clockwise", "counterclockwise", "axial", "radial", and "circumferential" are orientations or position relationship shown based on the accompanying drawings, and are merely used for describing the present disclosure and simplifying the description, rather than indicating or implying that the apparatus or element should have a particular orientation or be constructed and operated in a particular orientation, and therefore, should not be construed as a limitation on the present disclosure.

In the description of the present disclosure, "a plurality of" means two or more than two, and "several" means one or more.

Specific implementations of the present disclosure are described in detail below with reference to the accompanying drawings.

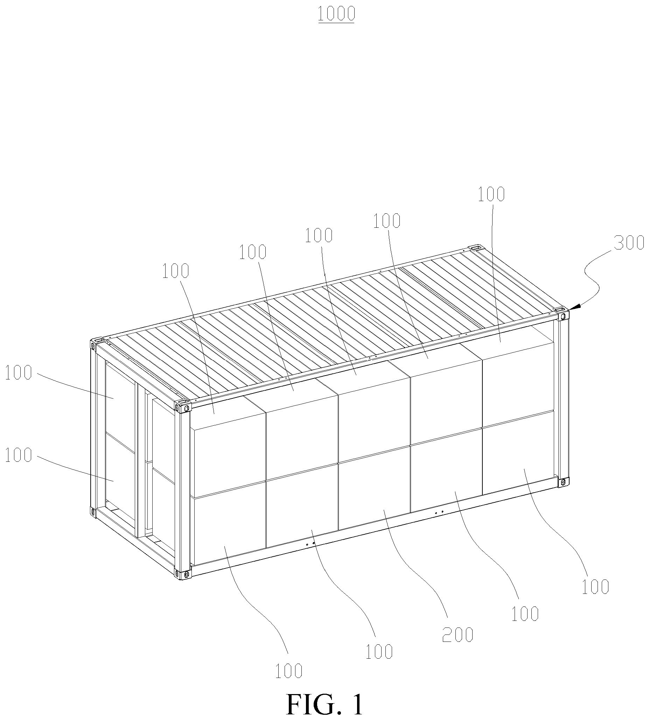

As shown in FIG. 1, an energy storage system 1000 is disclosed, comprising multiple energy storage battery cabinets 100 and a distribution box 200. The energy storage system 1000 may generally be a household energy storage system or a commercial energy storage system, and a quantity of energy storage battery cabinets 100 included in the energy storage system 1000 may be set according to specific requirements. The multiple energy storage battery cabinets 100 are electrically connected to the distribution box 200, to implement power distribution management. In some implementations, the energy storage system 1000 may further comprise a mounting frame 300, and both the battery cabinet 100 and the distribution box 200 may be mounted on the mounting frame 300.

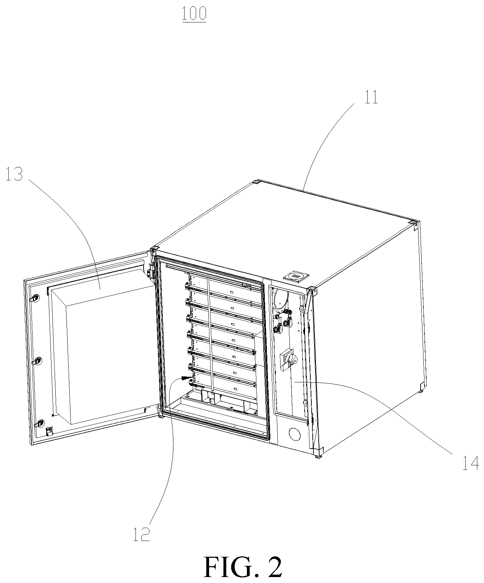

As shown in FIG. 2, the energy storage battery cabinet 100 may comprise a cabinet body 11, a battery pack 12, an air conditioning assembly 13, and a battery manager 14. An accommodating space is formed inside the cabinet body 11, and the battery pack 12 is accommodated in the cabinet body 11. The air conditioning assembly 13 is mounted on the cabinet body 11, and may usually be mounted inside the cabinet body 11, such as hanging on an inner wall of the cabinet body 11, or may be mounted outside the cabinet body 11, to play a role of adjusting an operating temperature inside the battery cabinet 100. The battery manager 14 may be configured for charging and discharging management of the battery pack 12.

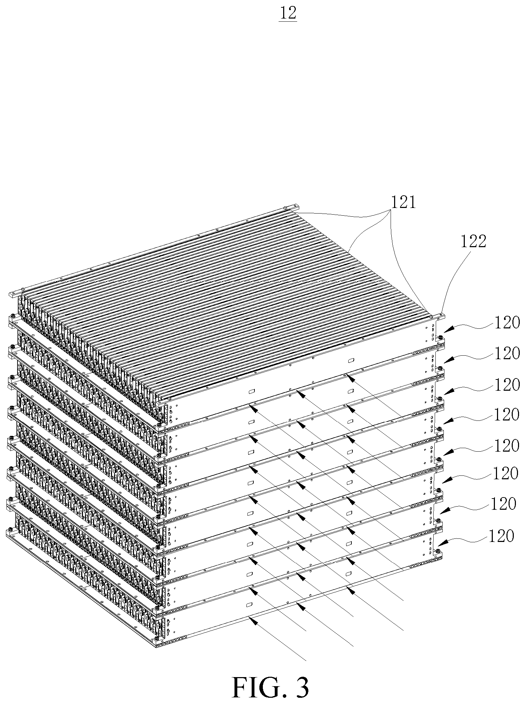

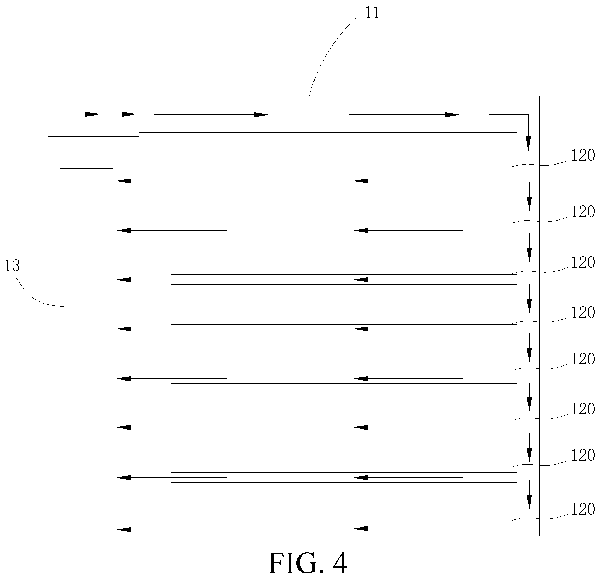

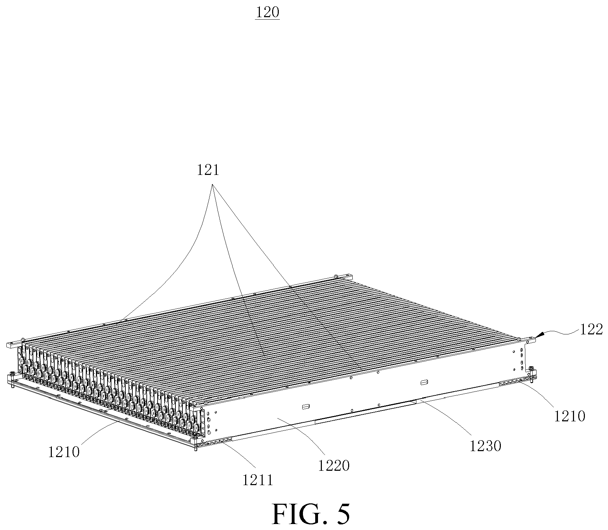

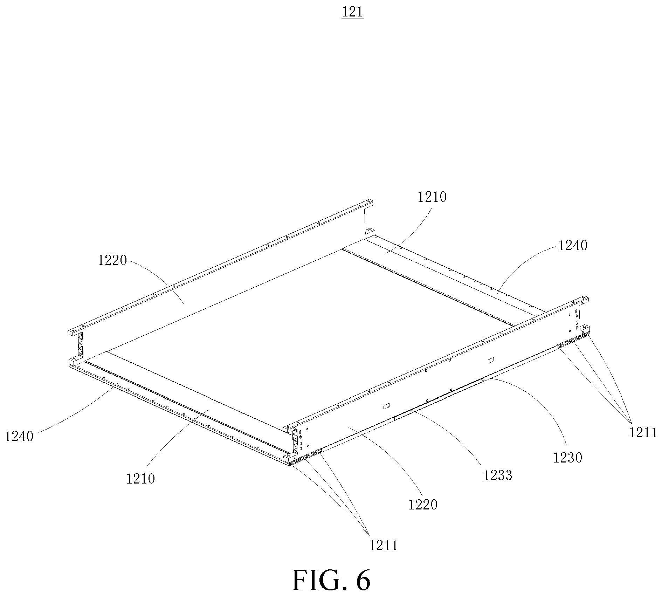

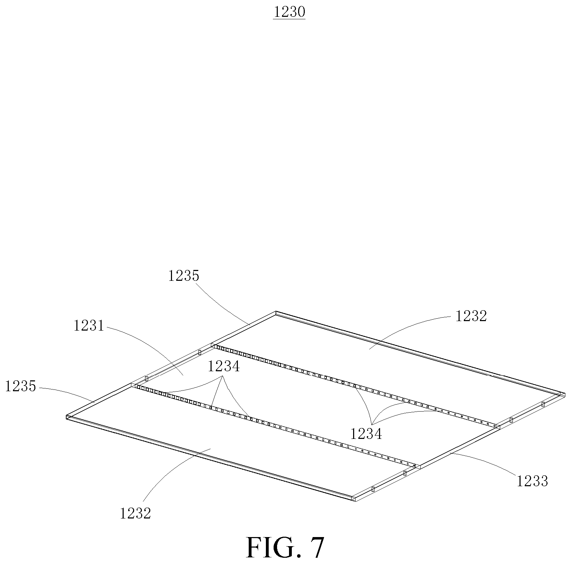

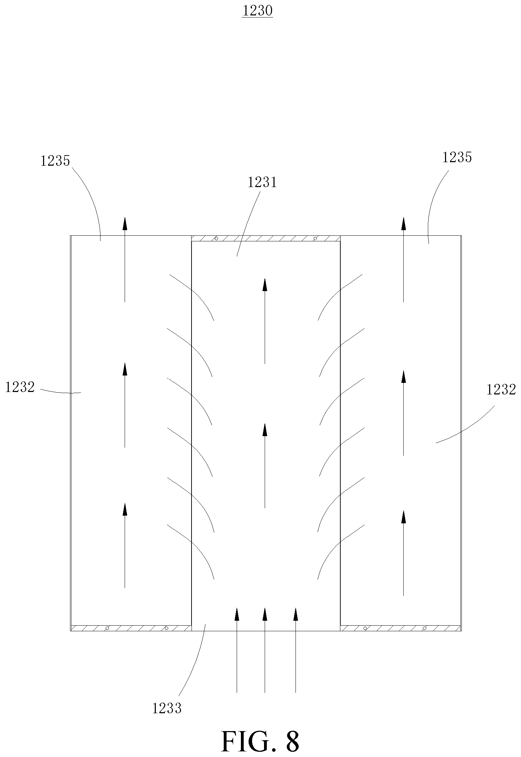

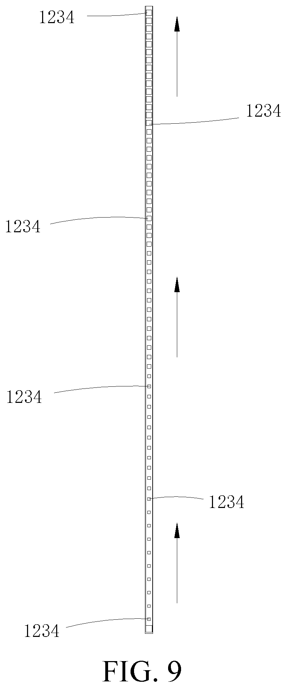

As shown in FIG. 3 to FIG. 9, the battery pack 12 comprises multiple battery assemblies 120.

Because an architecture of the energy storage system 1000 and the foregoing structural hierarchy of the energy storage battery cabinet 100 are not the focus of improvement in this specification, and there are many typical implementations of the foregoing structural hierarchy in the related art. Details are not described herein again. In the present disclosure, improvement of the energy storage system 1000 and the energy storage battery cabinet 100 mainly depends on the battery pack 12 and the battery assembly 120. Therefore, specific implementations of the battery pack 12 and the battery assembly 120 are mainly described in detail below.

In the battery pack 12, the battery assembly 120 has a preset length direction, a preset width direction, and a preset height direction, and the length direction, the width direction, and the height direction are perpendicular to each other. Multiple battery assemblies 120 are stacked along the height direction. The height direction herein may be understood as a vertical direction. Usually, during actual application, a height direction of the energy storage system 1000 or the energy storage battery cabinet 100 included in the energy storage system 1000 after placement or mounting is the vertical direction. The battery pack 12 is substantially in a shape of a cuboid. Therefore, for ease of understanding, a direction of the battery assembly 120 that is the same as the vertical direction in normal use is defined as the height direction of the battery assembly 120, and correspondingly, the length direction and the width direction of the battery assembly 120 are defined in a horizontal direction.

The battery pack 10 comprises multiple battery assemblies 120, and the multiple battery assemblies 120 are stacked along the height direction. For example, in some implementations, the battery pack 10 comprises K battery assemblies 120, and 2≤K≤16. Adjacent battery assemblies 120 may be mounted and fixed by connection between battery supports 122. For example, the battery supports 122 of the adjacent battery assemblies 120 may be fixed by screw connection.

In some implementations, the battery assemblies 120 comprise even-numbered cells 121; and the cells 121 each comprise a positive terminal and a negative terminal, and the positive terminal and the negative terminal are respectively located at two opposite ends of the cells 121 in a length direction. In this way, the positive terminal and the negative terminal of each of the cells 121 are located on opposite sides, and arrangement of the even-numbered cells 121 facilitates connection between the battery assemblies 120 on an upper layer and a lower layer.

The battery assemblies 120 comprise the multiple cells 121, and the battery supports 122.

Each of the cells 121 is substantially in a shape of a cuboid. Each of the cells 121 is substantially in a shape of a cuboid, which means that a main body part of each of the cells 121 is in a shape of a cuboid. However, because each of the cells 121 usually further comprises structures such as an electrode terminal and an explosion-proof valve that are located at an end portion of the main body part, the cell as a whole is not strictly in a shape of a cuboid, or the cell as a whole is not strictly in a shape of a cuboid due to factors such as a dimensional shape tolerance and local irregularities, but the cell is substantially in a shape of a cuboid. Accordingly, a length of each of the cells 121 may be understood as a length of the main body part of each of the cells 121, that is, the electrode terminal part is not included.

The multiple cells 121 are arranged along the width direction of the battery assembly 120, a thickness direction of the cells 121 is consistent with the width direction of the battery assembly 120, and a length direction of the cells 121 is consistent with the length direction of the battery assembly 120. In addition, each of the cells 121 extends from one side of the battery assembly 120 in the length direction to the other opposite side of the battery assembly 120 in the length direction. In other words, only one cell 121 is arranged in the length direction of each battery assembly 120, and the cells 121 as a whole span from one side to the other side. An auxiliary reinforcing member does not need to be arranged along the length direction of the battery assembly 120, thereby ensuring higher volume utilization and energy density. In addition, the multiple cells 121 are arranged along the width direction of the battery assembly 120, so that mutual limitation and reinforcement can be formed. The cells can also play an auxiliary reinforcement role on the formed battery assembly 120 in the length direction, thereby ensuring overall structural strength of the battery assembly 120.

The battery supports 122 comprise a bottom plate 1210 extending along the width direction of the battery assembly 120, end plates 1220 connected to two opposite ends of the bottom plate 1210, and a heat dissipation air deflector 1230. At least a part of bottom portions of the multiple cells 121 are supported on bottom plates 1210, and two end plates 1220 are sandwiched between two sides of the multiple cells 121 in the thickness direction.

The battery supports 122 are arranged, so that the multiple cells 121 can be fixed by the battery supports 122, structural strength of the battery supports 122 can be used to assist in improving structural strength of the cells 121, and a quantity of battery assemblies 120 that can be arranged in the battery supports 122, the energy storage battery cabinet 100, and the energy storage system 1000 may be greater. For example, in the battery supports 122, the quantity of battery assemblies 120 may be 6-20 and the battery assemblies are sequentially stacked in the height direction. In this way, volume utilization of the energy storage battery cabinet 100 and the energy storage system 1000 is greater and the energy density is higher.

Specifically, the battery support 122 comprises two bottom plates 1210, the two bottom plates 1210 are spaced apart and respectively supported at two ends of the cell 121 in the length direction, and two ends of the two end plates 1220 are respectively fixed on the two bottom plates 1210. In this way, a gap between the two bottom plates 1210 forms an air duct gap, and the heat dissipation air deflector 1230 is arranged in the gap between the two bottom plates 1210, that is, in the air duct gap, and is configured to be in contact with the cell 121 in a heat conducting manner, to dissipate heat from the cell 121, making the cell 121 less susceptible to heat damage, thereby extending a service life of the energy storage battery cabinet 100, or meeting a requirement of high-power charging.

The heat dissipation air deflector 1230 may be in a shape of a cuboid-shaped flat plate. An air inlet cavity 1231 is formed inside the heat dissipation air deflector 1230, and the heat dissipation air deflector 1230 is adjacent to air outlet cavities 1232 on two sides of the air inlet cavity 1231. An air inlet 1233 that is in communication with the air inlet cavity 1231 is provided on one side of the heat dissipation air deflector 1230, two air outlets 1235 are provided on the other opposite side of the heat dissipation air deflector 1230, and the two air outlets 1235 are respectively in communication with the two air outlet cavities 1232. Positions at which the air inlet cavity 1231 is adjacent to the air outlet cavities 1232 are in communication via air holes 1234.

In this way, a cooling airflow entering a middle air inlet cavity 1231 can both flow through the air inlet cavity 1231 and enter the air outlet cavities 1232 on the two sides via the air holes 1234, so that the batteries in contact with positions of various cavities can dissipate heat. In addition, the air inlet 1233 is provided on one side of the air inlet cavity 1231, and air does not enter the air inlet cavity from an entire side surface of the heat dissipation air deflector 1230, so that an area of the air inlet 1233 can be reduced, to avoid a problem that when an air volume and a wind speed are too low, after cold air blowing by an air conditioning assembly 13 absorbs heat generated by batteries around the air inlet 1233, a cold air volume decreases and a temperature rises, and the further the cold air flows towards the air outlets 1235, the higher the temperature, resulting in heat dissipation of the battery close to the air inlet 1233 and batteries close to the air outlets 1235 being not uniform and an excessive temperature difference. In summary, the batteries in contact with positions of various cavities can dissipate heat in a uniform manner.

In other words, three cavities are provided in the heat dissipation air deflector 1230, a middle cavity is the air inlet cavity 1231, and the other two cavities are located on two sides of the air inlet cavity 1231, which are the air outlet cavities 1232. The three cavities are configured with one side open and the other side closed. An opening side of the middle air inlet cavity 1231 is the air inlet 1233, and the other opposite side of the air inlet cavity 1231 is closed. The closed side is on the same side as an air returning outlet of the air conditioning assembly 13. The cavities on the two sides are the air outlet cavities 1232. Opening sides of the air outlet cavities 1232 are air outlets 1235, which are on the same side as the air returning outlet of the air conditioning assembly 13, and the other opposite sides of the two air outlet cavities 1232 are closed. A reason for closing the air outlet of the middle air inlet cavity 1231 is to prevent cold air blown into the air inlet air duct by the air conditioning assembly 13 from being directly discharged through the air returning outlet of the air conditioning assembly 13 without dissipating heat of batteries on two sides, resulting in the heat of the batteries on the two sides being unable to be fully dissipated. A reason for closing the air inlets of the air outlet cavities 1232 on the two sides is to reduce an area of the air inlet 1233, to avoid a problem that when an air volume and a wind speed are too low, after cold air blowing by the air conditioning assembly 13 absorbs heat generated by batteries around the air inlet 1233, a cold air volume decreases and a temperature rises, and the further the cold air flows towards a direction of the air outlets 1235, the higher the temperature, resulting in heat dissipation of the battery close to the air inlet 1233 and batteries close to the air outlets 1235 being not uniform and an excessive temperature difference.

In specific implementation, the heat dissipation air deflector comprises a housing and two separating plates. A cavity is formed inside the housing. The two separating plates are spaced apart in the cavity, and separate the cavity into the air inlet cavity 1231 located between the two separating plates and the two air outlet cavities 1232 located between the separating plates and the housing.

Multiple air holes 1234 are distributed on the separating plates along an air outlet direction.

In some implementations, pore sizes of the multiple air holes 1234 gradually increase or show an increasing trend along a direction from the air inlet 1233 to the air outlets 1235. In some other implementations, spacings between the multiple air holes 1234 decrease or show a decreasing trend along the direction from the air inlet 1233 to the air outlets 1235. The increasing trend herein may be understood as that among the multiple air holes, pore sizes of some air holes may be the same, but the air holes show the increasing trend as a whole. The decreasing trend of the spacings may be understood in a same manner. Certainly, in specific implementation, increasing of the pore sizes and decreasing of the spacings may be simultaneously implemented.

The air holes 1234 are provided on the two sides of the middle air inlet cavity 1231. The cold air is blown in the air inlet cavity 1231 by the air conditioning assembly 13 to dissipate heat of the battery in the middle part, and simultaneously flows to the air outlet cavities 1232 on the two sides through these air holes 1234, to dissipate heat of the batteries on the two sides. In specific implementation, the air holes 1234 can be distributed on the two sides of the air inlet cavity 1231. In a distance from the air inlet 1233 of the air inlet cavity 1231 to the air outlets 1235 of the air outlet cavities 1232 on the two sides, areas of the air holes increase from small to large, and spacings between the air holes gradually decreases. This is arranged in such a manner because an air volume is the largest at the air inlet 1233 of the air inlet cavity 1231. Therefore, at a position close to the air inlet 1233, the air holes on the two sides of the air inlet cavity 1231 are provided in a small size, to prevent a large amount of cold air from directly flowing into the air outlet cavities 1232 on the two sides, reducing a temperature of a battery surface close to the air inlet 1233 to an extremely low level. This causes the cold air to flow toward the air outlets 1235. When the temperature of the airflow is high, heat of the batteries close to the air outlets 1235 cannot be fully dissipated. There is a large temperature difference between the temperature of the battery surface at the air inlet 1233 and battery surfaces at the air outlets 1235. Based on this, uniformity of heat dissipation of the cells 121 in the entire battery assembly 120 can be improved. The spacings between the air holes 1234 are set based on the same reason.

In some implementations, a volume of the air inlet cavity 1231 accounts for one third to one half of a volume of the cavity inside the housing. A reason of the arrangement is to control an area of the air inlet 1233, increase a flow rate of the air blown in, reduce heat conduction between the battery and the cold air at the air inlet 1233, reduce a temperature of the cold air close to the air outlets 1235 as much as possible, and increase uniformity of heat dissipation of the battery.

In some implementations, a heat dissipation air duct 1211 extending in a run-through manner is provided in at least one bottom plate 1210, and the heat dissipation air duct 1211 extends in a direction from the air inlet 1233 to the air outlets 1235. In this way, when an end portion of the cell 121 is supported on the bottom plate 1210, an end portion of the battery can also dissipate heat through the heat dissipation air duct in the bottom plate 1210, thereby further improving the uniformity of the heat dissipation of the battery.

In some implementations, the battery support further comprises two baffles 1240, and the two baffles 1240 are respectively arranged on the two bottom plates 1210 and are configured to block two ends of the cell 121 in a length direction. Specifically, a width of the baffle 1240 may be less than a width of the corresponding bottom plate 1210, and the baffle 1240 may be stacked and fixed on an upper side of the corresponding bottom plate 1210. An outer side of a width direction of the baffle 1240 may be substantially flush with an outer side of the bottom plate 1210, and an inner side of the width direction of the baffle 1240 and the bottom plate 1210 jointly form a stop step. When the end portion of the cell 121 is supported on the corresponding bottom plate 1210, the end portion is stopped and positioned by the stop step.

In some implementations, among the multiple cells 121, gaps are preset between at least some of the adjacent cells 121, and the gaps are filled with isolation medium layers. In specific implementation, the isolation medium layers can be made of insulating and heat-insulating materials, which can reduce impact of transportation vibration and battery expansion on the battery assembly 1, and can also prevent heat propagation between the cells, thereby reducing a risk of structural damage to the battery assembly and thermal runaway, and can further play a role of insulation. The isolation medium layers 123 may partially fill corresponding gaps. For example, the isolation medium layers may comprise a limiting part and an isolation part. A thickness of the limiting part may be substantially the same as a distance of the gap, and is used to limit a position between adjacent cells 121. A thickness of the isolation part is less than the distance of the gap, thereby retaining some gaps between the adjacent cells 121, and reducing the impact of the transportation vibration and the battery expansion on the battery assembly 1.

In some implementations, a buffer layer is arranged between at least one end plate 1220 and the adjacent cells 121. The buffer layer can be made of foam. The foam is arranged on the end plate 1220, which may be used to buffer an expansion force generated by the cell 121 during use. In addition, because the buffer layer 124 can be elastically expanded and contracted, the buffer layer 124 can be used to offset accumulation of dimensional tolerances in assembly.

In the description of this specification, description of reference terms such as "a specific embodiment" or "a specific example", means including specific features, structures, materials, or features described in the embodiment or example in at least one embodiment or example of the present disclosure. In this specification, schematic descriptions of the foregoing terms do not necessarily point at a same embodiment or example.

Although the embodiments of the present invention have been shown and described, a person skilled in the art can understand that the above implementations cannot be construed to limit the present invention, and changes, alternatives, and modifications can be made in the embodiments without departing from the principle and the purpose of the present invention, and the scope of the present invention is as defined by the appended claims and their equivalents.

## Claims

1. A heat dissipation air deflector (1230), suitable for being in contact with a battery and configured for heat dissipation of the battery, wherein an air inlet cavity (1231) is formed inside the heat dissipation air deflector (1230), and the heat dissipation air deflector (1230) is adjacent to air outlet cavities (1232) on two sides of the air inlet cavity (1231); an air inlet (1233) that is in communication with the air inlet cavity (1231) is provided on one side of the heat dissipation air deflector (1230), two air outlets (1235) are provided on the other opposite side of the heat dissipation air deflector (1230), and the two air outlets (1235) are respectively in communication with the two air outlet cavities (1232); and positions at which the air inlet cavity (1231) is adjacent to the air outlet cavities (1232) are in communication via air holes (1234).

2. The heat dissipation air deflector (1230) according to claim 1, comprising:
a housing, a cavity being formed inside the housing; and
two separating plates, the two separating plates being spaced apart in the cavity, and separating the cavity into the air inlet cavity (1231) located between the two separating plates and the two air outlet cavities (1232) located between the separating plates and the housing; and
the plurality of air holes (1234) being distributed on the separating plates along an air outlet direction.

3. The heat dissipation air deflector (1230) according to claim 2, wherein pore sizes of the plurality of air holes (1234) gradually increase or show an increasing trend along a direction from the air inlet (1233) to the air outlets (1235).

4. The heat dissipation air deflector (1230) according to claim 2 or 3, wherein spacings between the plurality of air holes (1234) decrease or show a decreasing trend along the direction from the air inlet (1233) to the air outlets (1235).

5. The heat dissipation air deflector (1230) according to any one of claims 2 to 4, wherein a volume of the air inlet cavity (1231) accounts for one third to one half of a volume of the cavity inside the housing.

6. A battery support (122), comprising:
two bottom plates (1210) that are spaced apart, configured to support a battery;
two end plates (1220), respectively connected to the bottom plates (1210) and configured to constrain two sides of the battery; and
the heat dissipation air deflector (1230) according to any one of claims 1 to 5, the heat dissipation air deflector (1230) being arranged in a gap between the bottom plates (1210) and being configured to be in contact with the battery in a heat conducting manner.

7. The battery support (122) according to claim 7, wherein a heat dissipation air duct (1211) extending in a run-through manner is provided in the at least one bottom plate (1210), and the heat dissipation air duct (1211) extends in a direction from the air inlet (1233) to the air outlets (1235).

8. The battery support (122) according to claim 6 or 7, wherein the battery support (122) further comprises two baffles (1240), and the baffles (1240) are respectively arranged on the two bottom plates (1210) and are configured to block two ends of the battery.

9. A battery assembly (120), comprising:
the battery support (122) according to any one of claims 6 to 8; and
a plurality of cells (121), wherein
the battery assembly (120) has a predetermined length direction and a width direction perpendicular to the length direction, the plurality of cells (121) are arranged along the width direction of the battery assembly (120), a thickness direction of the cells (121) is consistent with the width direction of the battery assembly (120), and a length direction of the cells (121) is consistent with the length direction of the battery assembly (120) and extends from one side of the battery assembly (120) in the length direction to the other opposite side of the battery assembly (120) in the length direction;
at least a part of bottom portions of the plurality of cells (121) are supported on bottom plates (1210), and two end plates (1220) are sandwiched between two sides of the plurality of cells (121) in the thickness direction; and a heat dissipation air deflector (1230) is in contact with the cells (121) in a heat conducting manner.

10. A battery pack (12), wherein the battery pack (12) comprises a plurality of battery assemblies (120) according to claim 9; and each of the battery assemblies (120) has a height direction perpendicular to a length direction and a width direction of each of the battery assemblies (120), and the plurality of battery assemblies (120) are stacked along the height direction.

11. The battery pack (12) according to claim 10, wherein the battery pack (12) comprises K battery assemblies (120), and 2≤K≤16.

12. The battery pack (12) according to claim 10 or 11, wherein the battery assemblies comprise even-numbered cells (121); and the cells (121) each comprise a positive terminal and a negative terminal, and the positive terminal and the negative terminal are respectively located at two opposite ends of the cells (121) in a length direction.

13. An energy storage battery cabinet (100), comprising:
a cabinet body (11);
the battery pack (12) according to any one of claims 10 to 12, mounted and accommodated in the cabinet body (11);
an air conditioning assembly (13), mounted on the cabinet body (11) and configured to adjust a temperature inside the cabinet body (11); and
a battery manager (14), electrically connected to the battery pack (12) and configured to manage the battery pack (12).

14. An energy storage system (1000), comprising at least one energy storage battery cabinet (100) according to claim 13.
